# FASCICULE DE BREVET EUROPEEN

(11) **EP 3 221 603 B1**
(45) Date de publication et mention de la délivrance du brevet: **22.08.2018**
(21) Numéro de dépôt: 15805587.1
(22) Date de dépôt: 17.11.2015
(51) Int. Cl.: F16C 17/02, F16C 33/10

(54) **PALIER LISSE AUTO-CENTRANT**
SELBSTZENTRIERENDES GLEITLAGER
PLAIN SELF-CENTRING BEARING

(30) Priorité: 20.11.2014 FR 1461242
(43) Date de publication de la demande: 27.09.2017
(73) Titulaire: SAFRAN AIRCRAFT ENGINES, 75015 Paris (FR)
(72) Inventeur: MORREALE, Serge, René, 77550 Moissy-cramayel Cedex (FR)
(74) Mandataire: Joanny, Damien Henri Xavier
(86) Numéro de dépôt international: PCT/FR2015/053101
(87) Numéro de publication internationale: WO 2016/079415

(56) Documents cités:
- EP-A1- 1 890 045
- DE-A1- 2 711 983
- DE-A1- 19 826 460
- GB-A- 1 161 895
- JP-A- H06 173 954
- JP-A- H08 128 310
- US-A1- 2012 108 380
- US-B1- 8 657 714

## Description

### DOMAINE DE L'INVENTION

Le présent exposé concerne un ensemble mécanique de deux pièces mécaniques tournant l'une par rapport à l'autre permettant d'obtenir un palier fluide auto-centrant.

Un tel ensemble mécanique est notamment utile au sein d'un organe de transmission, du type train épicycloïdal par exemple. En particulier, une telle invention peut trouver application dans le domaine aéronautique, au sein de turboréacteurs d'avions ou de turbomoteurs d'hélicoptères : elle peut notamment s'appliquer aux réducteurs de turboréacteurs à réducteur.

### ETAT DE LA TECHNIQUE ANTERIEURE

Les turboréacteurs classiquement rencontrés aujourd'hui dans le domaine de l'aviation civile sont des turboréacteurs double corps à double flux. Toutefois, en raison des contraintes toujours plus importantes sur les coûts d'exploitation, étroitement liés au coût des carburants, aujourd'hui très élevé, de nouveaux projets de turboréacteurs bénéficiant d'une plus faible consommation spécifique ont été proposés.

Une option prometteuse consiste à équiper le turboréacteur d'un réducteur de vitesse intercalé entre le compresseur basse-pression et la soufflante : de cette manière, il est possible d'augmenter la vitesse de rotation du corps basse-pression, augmentant ainsi le rendement global du turboréacteur, tout en réduisant la vitesse de la soufflante, ce qui permet d'augmenter le diamètre de la soufflante, et donc le taux de dilution du moteur (bypass ratio), en conservant une vitesse périphérique en bout de pale acceptable pour limiter la survenance de perturbations aérodynamiques génératrices notamment de bruit.

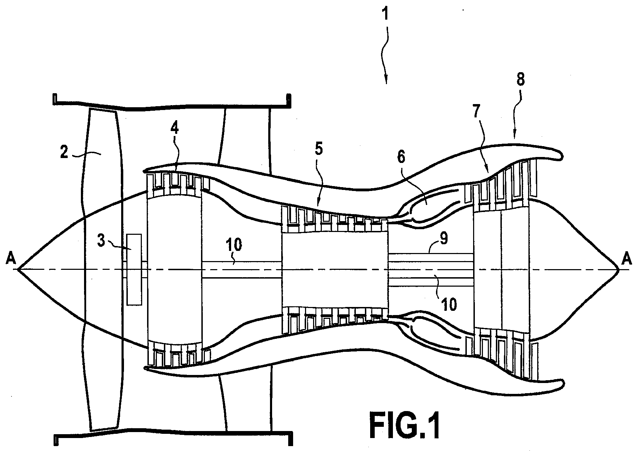

Un tel turboréacteur à double flux à réducteur est représenté à la FIG 1, en coupe selon un plan vertical passant par son axe principal A. Il comporte, d'amont en aval, une soufflante 2, un réducteur 3, un compresseur basse pression 4, un compresseur haute pression 5, une chambre de combustion 6, une turbine haute pression 7 et une turbine basse pression 8.

Dans un tel turboréacteur à réducteur 1, la turbine haute pression 7 entraîne le compresseur haute pression 5 à l'aide d'un arbre haute pression 9. La turbine basse pression 8, également appelée turbine rapide, entraîne quant à elle le compresseur basse pression 4 à l'aide d'un arbre basse pression 10. La turbine rapide 8 entraîne également la soufflante 2 par l'intermédiaire du réducteur de vitesse 3. De cette manière, la soufflante 2 peut être entraînée à vitesse réduite, ce qui est favorable du point de vue aérodynamique, tandis que la turbine basse pression 7 peut évoluer à vitesse plus importante, ce qui est favorable d'un point de vue thermodynamique.

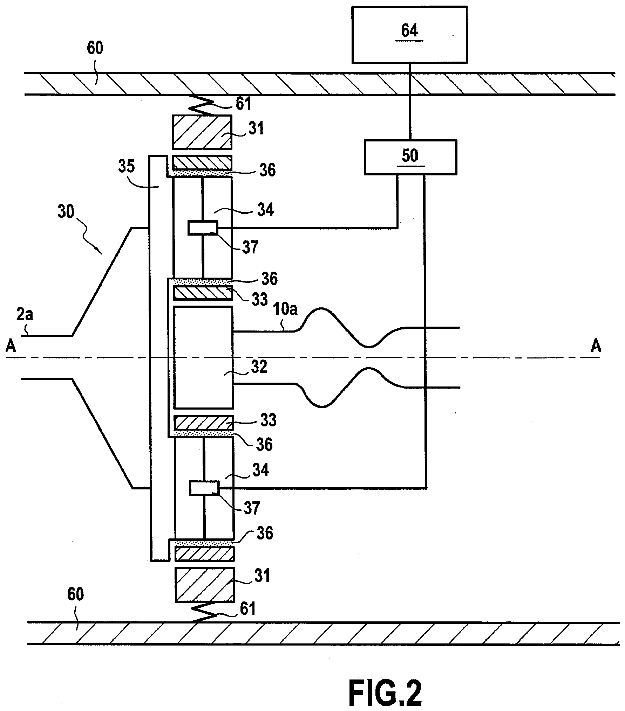

Comme cela est représenté sur la FIG 2, ce réducteur 3 peut être un train épicycloïdal muni d'une couronne 31, d'un pignon planétaire 32, et de pignons satellites 33. Les pignons satellites 33 sont montés en rotation sur des fusées 34 d'un porte-satellites 35: chaque pignon satellite 33 tourne donc autour de l'axe F de sa fusée 34 respective. Les paliers 36 entre les pignons satellites 33 et leurs fusées respectives 34 peuvent être lisses, c'est-à-dire dépourvus de mécanisme de roulement, et comprennent alors un film d'huile sous pression permettant la lubrification et le refroidissement des paliers 36. Un exemple de système de distribution d'huile est donné dans la demande de brevet français déposée sous le numéro 13 58581.

Dans une configuration classique, la couronne 31 est fixée au carter 60, le porte-satellites 35 est accouplé à l'arbre de soufflante 2a, entrainant la soufflante 2, et le pignon planétaire 32 est accouplé à une extrémité 10a de l'arbre basse pression 10.

Lors du fonctionnement du turbomoteur, en raison de la rotation du pignon planétaire 32 et du blocage de la couronne 31, les pignons satellites 33 sont entraînés dans une course superposant une rotation autour de l'axe de rotation A du train épicycloïdal et une rotation autour de l'axe F de leurs fusées respectives 34 : dès lors, les fusées 34 et le porte-satellites 35 tout entier sont entraînés en rotation autour de l'axe de rotation A du train épicycloïdal.

On comprend dès lors que la force d'entraînement des pignons satellites 33, la force centrifuge et, dans une moindre mesure, la force de gravitation entraînent un décentrage des pignons satellites 33 par rapport aux fusées 34. En particulier, du fait de la force d'entraînement, on observe un pincement du film d'huile en arrière de chaque fusée 34.

Ce décentrage a alors pour conséquence d'augmenter le risque qu'un pignon satellite 33 n'entre en contact avec sa fusée 34 et n'endommage ainsi le palier.

Pour remédier à ce phénomène, des ensembles réducteurs ont été proposés dans lesquels une distribution d'huile hétérogène est prévue au sein du palier afin d'apporter une quantité plus importante d'huile au niveau des zones les plus exposées au risque de frottement.

Toutefois, en général, cette distribution d'huile hétérogène est soit une correction statique, qui ne tient donc pas compte de l'état véritable du système, soit une correction dynamique mais nécessitant la mise en place de capteurs, d'actionneurs et de contrôleurs électronique, ce qui augmente grandement la complexité et le coût du système.

On connaît également les documents EP 1 890 045, JP H08 128310, DE 198 26 460 et JP H06 173954 qui décrivent des systèmes de lubrification pour ensembles rotatifs.

Il existe donc un réel besoin pour un ensemble mécanique qui soit dépourvu, au moins en partie, des inconvénients inhérents aux configurations connues précitées.

### PRESENTATION DE L'INVENTION

La présente invention concerne un ensemble mécanique selon la revendication 1. Plus généralement, le présent exposé concerne un ensemble mécanique comprenant une première pièce munie d'une cavité cylindrique, une deuxième pièce comprenant au moins une portion cylindrique engagée dans la cavité cylindrique de la première pièce, un interstice séparant la portion cylindrique et la paroi de la cavité cylindrique afin de permettre un mouvement relatif de rotation entre la première et la deuxième pièce, et un réseau de distribution de lubrifiant configuré pour alimenter ledit interstice avec un lubrifiant fluide de manière à former un palier fluide, caractérisé en ce qu'une première surface parmi la surface intérieure de la cavité cylindrique de la première pièce et la surface extérieure de la portion cylindrique de la deuxième pièce est munie d'au moins deux orifices d'arrivée de lubrifiant distants de plus de 120° l'un de l'autre autour de l'axe principal de la première surface, et en ce que la première surface présente en outre au moins une rainure circonférentielle s'étendant circonférentiellement, dans le sens de la rotation relative de la seconde desdites surfaces par rapport à la première surface, depuis le voisinage d'un premier orifice d'arrivée de lubrifiant sur au moins 100°.

Grâce à cette configuration, il est possible d'équilibrer automatiquement le débit de lubrifiant à apporter dans différentes zones du palier fluide. En effet, lorsque les première et deuxième pièces se rapprochent dans une direction donnée, il se produit un pincement du palier fluide dans une zone correspondante de l'interstice : ce pincement restreint alors la section de passage du lubrifiant en sortie de l'orifice d'arrivée de lubrifiant situé dans la zone du pincement, ce qui réduit alors le débit de lubrifiant s'échappant de cet orifice et augmente en contrepartie le débit de lubrifiant s'échappant du ou des autres orifices. Une quantité accrue de lubrifiant parcourt alors la rainure circonférentielle et apporte ainsi un surplus de lubrifiant dans la zone située en amont de la zone de pincement.

Ainsi, lorsque la seconde surface tourne, un point donné de cette dernière passe d'abord dans la zone comportant le surplus de lubrifiant, emportant avec lui une partie du lubrifiant, avant d'atteindre la zone de pincement : la seconde surface bénéficie donc d'une lubrification accrue dans la zone de pincement, ce qui réduit le risque que les première et seconde surfaces n'entrent en contact et participe à recentrer la seconde surface par rapport à la première surface.

Naturellement, ce système de distribution de lubrifiant est dynamique et peut s'équilibrer automatiquement en cas de déplacement de la zone de pincement. En outre, en cas de recentrage de l'ensemble mécanique, le pincement disparait et l'interstice possède alors une largeur constante tout autour de la portion cylindrique de la deuxième pièce : les sections de passage des orifices d'arrivée de lubrifiant s'équilibrent alors ainsi que les débits d'alimentation en lubrifiant.

Un tel ensemble mécanique est ainsi capable de maintenir et d'équilibrer un palier fluide, dépourvu de dispositif de roulement, entre les deux pièces de manière automatique et dynamique. En particulier, il permet de réduire le risque de contact entre les deux pièces, quel que soit le décentrage rencontré, et contribue à recentrer la pièce tournante par rapport à son support. On obtient ainsi un ensemble mécanique dont la pièce tournante peut tourner de manière fluide, sans à-coup et avec une perte d'énergie minimale.

Dans le présent exposé, les termes « axial », « radial », « tangentiel », « intérieur », « extérieur » et leurs dérivés sont définis par rapport à l'axe principal de l'organe de transmission ; le terme « orthoradial » est défini par rapport à un tel axe radial ; on entend par « plan axial » un plan passant par l'axe principal de l'organe de transmission et par « plan radial » un plan perpendiculaire à cet axe principal. En outre, les termes « amont » et « aval » sont définis par rapport au sens de rotation relative de la seconde surface par rapport à la première surface.

Dans certains modes de réalisation, la première pièce tourne autour de la deuxième pièce.

Dans certains modes de réalisation, la première pièce est un pignon et la deuxième pièce est un moyeu, ledit pignon tournant autour dudit moyeu.

Dans d'autres modes de réalisation, la première pièce est une portée de palier et la deuxième pièce est un arbre, ledit arbre tournant au sein de la portée de palier.

Dans certains modes de réalisation, la première surface est la surface extérieure de la portion cylindrique de la deuxième pièce et la seconde surface est la surface intérieure de la cavité cylindrique de la première pièce. Cette configuration est plus facile à mettre en place dans le cadre d'un pignon tournant autour d'un moyeu, même si le moyeu est lui-même en mouvement dans le référentiel d'un organe mécanique de plus grande taille.

Dans certains modes de réalisation, la portion cylindrique de la deuxième pièce comprend une chambre de réception de lubrifiant, configurée pour recevoir du lubrifiant depuis une source de lubrifiant et connectée fluidiquement aux orifices d'arrivée de lubrifiant. La chambre de réception de lubrifiant et les conduits d'amenée de lubrifiant aux orifices d'arrivée de lubrifiant font partie du réseau de distribution de lubrifiant. Cette chambre permet une répartition aisée du lubrifiant vers les différents orifices d'arrivée de lubrifiant. Elle peut être alimentée en lubrifiant à l'aide d'un distributeur externe, par exemple du type du distributeur décrit dans la demande de brevet français déposée sous le numéro 13 58581.

Dans certains modes de réalisation, la première surface comporte, dans un premier plan transversal, des premier et deuxième orifices d'arrivée de lubrifiant diamétralement opposés. Ceci permet d'assurer un équilibrage efficace selon un premier axe.

Dans certains modes de réalisation, la première surface comporte, dans un deuxième plan transversal distinct du premier plan transversal, des troisième et quatrième orifices d'arrivée de lubrifiant diamétralement opposés. Ceci permet d'assurer un équilibrage efficace selon un deuxième axe.

Dans certains modes de réalisation, les premier et deuxième orifices d'arrivée de lubrifiant sont disposés sur une droite orthogonale à la droite sur laquelle sont disposés les troisième et quatrième orifices d'arrivée de lubrifiant. Grâce à cette disposition, les premier et deuxième axes d'équilibrage sont orthogonaux, ce qui facilite le recentrage du système quelle que soit la direction du décentrage.

Dans certains modes de réalisation, une rainure circonférentielle s'étend circonférentiellement, dans le sens de la rotation relative de la seconde desdites surfaces par rapport à la première surface, depuis le voisinage de chaque orifice d'arrivée de lubrifiant sur au moins 100°. On transporte ainsi du lubrifiant depuis chaque orifice d'arrivée de lubrifiant vers une zone en amont de l'orifice suivant.

Dans certains modes de réalisation, la rainure circonférentielle s'étend dans le même plan transversal que le premier orifice d'arrivée de lubrifiant. Ceci facilite le passage du lubrifiant de l'orifice vers la rainure.

Dans certains modes de réalisation, l'extrémité amont de la rainure circonférentielle est disjointe du premier orifice d'arrivée de lubrifiant. Autrement dit, l'orifice ne débouche pas au fond de la rainure mais en surface de la pièce. L'orifice ne débouchant pas directement dans la rainure, la section de passage en sortie de l'orifice est réduite effectivement de manière importante dans la zone de pincement, ce qui augmente de manière importante le débit d'huile vers les autres orifices.

Dans certains modes de réalisation, l'extrémité amont de la rainure circonférentielle est distante de moins de 10°, de préférence de moins de 5°, du premier orifice d'arrivée de lubrifiant. Ceci facilite le passage du lubrifiant de l'orifice vers la rainure.

Dans certains modes de réalisation, la rainure circonférentielle s'étend sur au moins 160°. On apporte ainsi du lubrifiant au plus près de la zone de pincement.

Dans certains modes de réalisation, la distance angulaire séparant l'extrémité aval de la rainure circonférentielle et un deuxième orifice d'arrivée de lubrifiant est comprise entre 5° et 20°, de préférence entre 10° et 15°. Il s'agit d'un compromis entre l'intérêt d'apporter du lubrifiant au plus près de la zone de pincement et celui que du lubrifiant provenant du deuxième orifice ne pénètre pas dans la rainure circonférentielle du premier orifice au détriment de sa propre rainure circonférentielle.

Dans certains modes de réalisation, la première surface présente en outre au moins une rainure longitudinale s'étendant longitudinalement depuis l'extrémité aval d'une rainure circonférentielle. Cette rainure longitudinale permet d'amorcer un film d'huile sur une longueur importante de la première surface.

Dans certains modes de réalisation, le lubrifiant est de l'huile.

Le présent exposé concerne également un organe de transmission, du type train épicycloïdal, comportant un ensemble mécanique selon l'une quelconque des revendications précédentes, dans lequel la première pièce de l'ensemble mécanique est un pignon satellite de train épicycloïdal et la deuxième pièce est une fusée d'un porte-satellites de train épicycloïdal.

On obtient ainsi un organe de transmission, par exemple un réducteur, dont les pignons satellite peuvent bénéficier d'un palier lisse auto-centrant. On obtient ainsi les avantages de l'ensemble mécanique présenté ci-dessus. A l'échelle de l'organe de transmission, on augmente le rendement énergétique de la transmission et on réduit les vibrations ainsi que les échauffements. La durée de vie de l'organe de transmission est en outre prolongée.

Le présent exposé concerne également une turbomachine comprenant un organe de transmission selon l'un quelconque des modes de réalisation précédents.

Dans certains modes de réalisation, la turbomachine comporte en outre une turbine basse pression et une soufflante, et le train épicycloïdal de l'organe de transmission comporte en outre un pignon planétaire et une couronne.

Dans certains modes de réalisation, la couronne est fixée au carter, de préférence à l'aide d'une liaison souple, le pignon planétaire est accouplé avec la turbine basse pression, de préférence à l'aide d'une liaison souple, et le porte-satellites est accouplé avec la soufflante, de préférence à l'aide d'une liaison raide. On entend par « liaison souple », une liaison plus souple en flexion que la liaison dite « raide ».

Les caractéristiques et avantages précités, ainsi que d'autres, apparaîtront à la lecture de la description détaillée qui suit, d'exemples de réalisation de l'ensemble mécanique et de l'organe de transmission proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence. En outre, des éléments (ou parties d'élément) appartenant à des exemples de réalisation différents mais ayant une fonction analogue sont repérés sur les figures par des références numériques incrémentées de 100, 200, etc.

La FIG 1 est une vue en coupe axiale d'un exemple de turbomachine à réducteur.

La FIG 2 est un schéma de principe de l'organe de transmission.

La FIG 3 est une vue en perspective d'une fusée.

La FIG 4A est une vue en coupe selon le plan IVA de la FIG 3.

La FIG 4B est une vue en coupe selon le plan IVB de la FIG 3.

Les FIG 5A et 5B illustrent l'alimentation en lubrifiant, dans les plans IVA et IVB respectivement, lorsque la fusée est centrée.

Les FIG 6A et 6B illustrent l'alimentation en lubrifiant, dans les plans IVA et IVB respectivement, lorsque la fusée est décentrée.

La FIG 7 est une vue en coupe illustrant un deuxième exemple de réalisation.

Les FIG 8A et 8B sont des vues en coupe dans deux plans différents illustrant un troisième exemple de réalisation.

### DESCRIPTION DETAILLEE D'EXEMPLE(S) DE REALISATION

Afin de rendre plus concrète l'invention, un exemple d'organe de transmission est décrit en détail ci-après, en référence aux dessins annexés. Il est rappelé que l'invention ne se limite pas à cet exemple.

La FIG 1 représente un turboréacteur à double flux à réducteur tel que décrit à titre introductif comportant un organe de transmission 3 selon l'invention.

Cet organe de transmission 3 comprend un train épicycloïdal 30 analogue à celui qui a été décrit à titre introductif en référence à la FIG 2.

On note en particulier que, dans cet exemple, la couronne 31 est fixée au carter 60 par des viroles souples 61, le porte-satellites 35 est accouplé à l'arbre de soufflante 2a, entrainant la soufflante 2, par une liaison raide, et que le pignon planétaire 32 est accouplé de manière souple à une extrémité cannelée 10a de l'arbre basse pression 10.

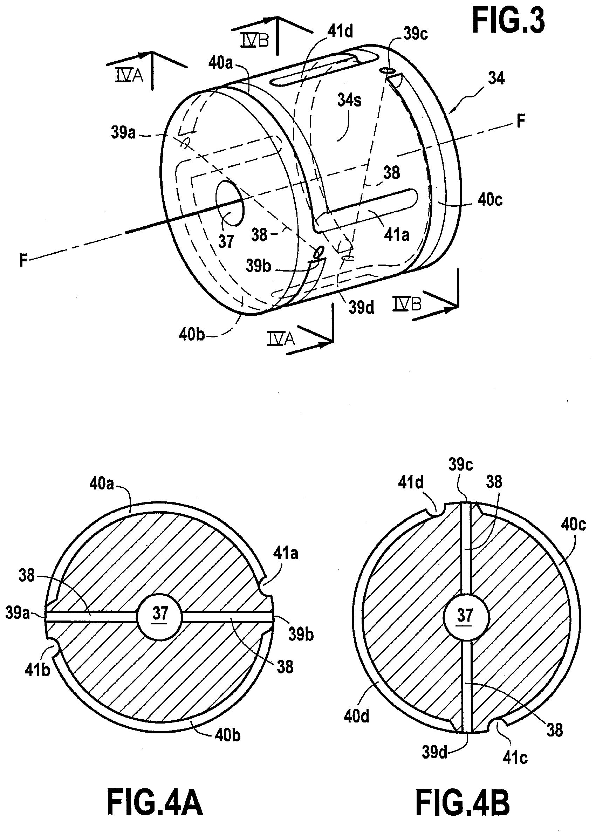

Dans cet exemple selon l'invention, comme cela est mieux visible sur les FIG 3, 4A et 4B, les fusées 34 des pignons satellites 33 comportent chacune une chambre de réception d'huile 37 connectée fluidiquement à l'interstice 36 formant le palier lisse par des canaux 38 traversant la fusée 34 et débouchant par des orifices d'injection 39a-39d, dits orifices d'arrivée d'huile.

La fusée 34 comprend des premier et deuxième orifices d'arrivée d'huile 39a, 39b situés de manière diamétralement opposée dans un premier plan radial IVA s'étendant à proximité d'une première extrémité de la fusée 34 ; elle comprend en outre des troisième et quatrième orifices d'arrivée d'huile 39c, 39d situés de manière diamétralement opposée dans un deuxième plan radial IVB s'étendant à proximité de la deuxième extrémité de la fusée 34. Les troisième et quatrième orifices 39c, 39d sont disposés de manière déphasée de 90° par rapport aux premier et deuxième orifices 39a, 39b, c'est-à-dire que la droite reliant les troisième et quatrième orifice 39c, 39d est orthogonale à la droite reliant les premier et deuxième orifices 39a, 39b. Ainsi, les orifices 39a-39d sont prévus respectivement à 0°, 90°, 180° et 270° autour de l'axe F de la fusée 34.

Chaque orifice 39a-39d débouche en surface de la fusée 34. Des rainures circonférentielles 40a-40d sont en outre prévues en surface de la fusée 34. Chaque rainure circonférentielle 40a-40d s'étend depuis le voisinage immédiat d'un orifice d'arrivée d'huile 39a-39d dans le même plan radial que cet orifice : plus précisément, l'extrémité amont d'une rainure circonférentielle 40a est prévue juste en aval de l'orifice 39a correspondant, à moins de 5° d'écart avec cet orifice, sans toutefois que l'orifice 39a ne débouche directement dans la rainure 40a. Dans cet exemple, le pignon 33 tourne dans le sens horaire autour de la fusée 34 : l'extrémité amont de la rainure circonférentielle 40a est donc prévue juste après l'orifice 39a dans le sens horaire.

La rainure circonférentielle 40a-40d associée à un orifice donné 39a-39d s'étend jusqu'à une zone située en amont de l'autre orifice 39b, 39a, 39d, 39c du même plan radial IVA, IVB : plus précisément, son extrémité aval est prévue entre 10 et 15° plus en amont que cet autre orifice 39b, 39a, 39d, 39c, c'est-à-dire en l'espèce entre 10 et 15° parcourus dans le sens antihoraire. Chaque rainure circonférentielle 40a-40d s'étend donc sur environ 160°.

De plus, chaque rainure circonférentielle 40a-40d se prolonge à son extrémité aval par une rainure longitudinale 41a-41d : les rainures longitudinales 41a et 41b s'étendent longitudinalement depuis les rainures circonférentielles 40a et 40b en direction du plan IVB sans toutefois l'atteindre ; les rainures longitudinales 41c et 41d s'étendent longitudinalement depuis les rainures circonférentielles 40c et 40d en direction du plan IVA sans toutefois l'atteindre.

L'organe de transmission 3 comprend en outre un distributeur d'huile 50 assurant la distribution d'huile de lubrification depuis une alimentation en huile 64, prévue au stator, jusqu'aux paliers 36 des pignons satellites 33.

De tels distributeurs d'huile sont connus : dans cet exemple, il peut s'agir d'un distributeur analogue à celui décrit dans la demande de brevet français déposée sous le numéro 13 58581. Dès lors, ce distributeur ne sera pas décrit à nouveau en détail. Il suffit de savoir qu'il comprend une partie tournante, entraînée solidairement en rotation par le porte-satellites 35, récupérant de l'huile depuis le stator et la transférant aux chambres de réception d'huile 37 des fusées 34 à l'aide de conduits de liaison.

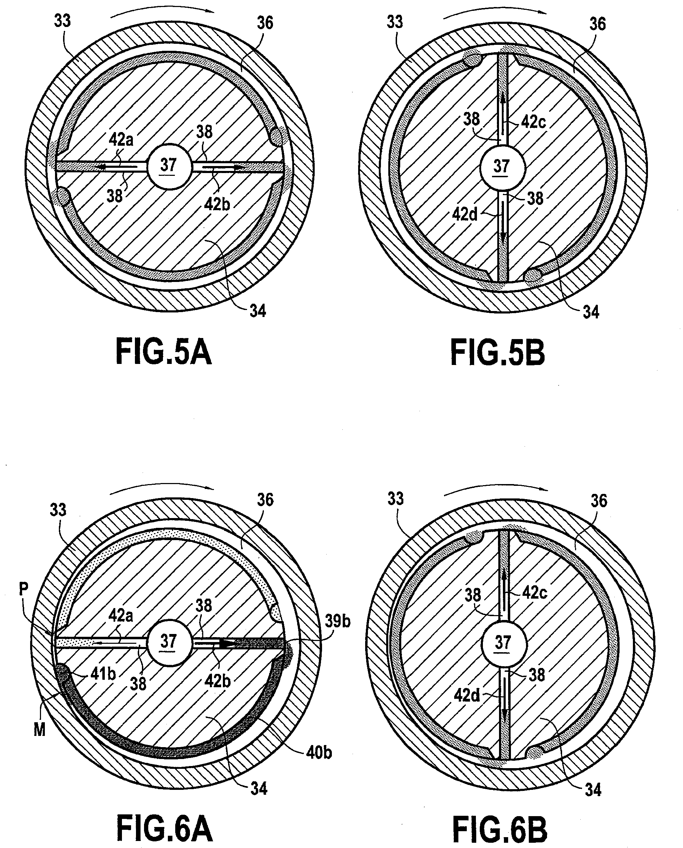

Le fonctionnement du système d'équilibrage de ce palier fluide va maintenant être décrit en référence aux FIG 5A, 5B, 6A et 6B. Dans le cas des FIG 5A et 5B, le pignon 33 est correctement centré autour de sa fusée 34. Aucune zone de pincement n'apparait donc dans l'interstice 36 : la distance séparant la surface 34s de la fusée 34 de la surface interne de la cavité centrale du pignon 33 est constante tout autour de la fusée 34. Dans ces conditions, l'huile se répartit équitablement dans les canaux 38 de telle sorte que les débits d'huile 42a-42d injectés par les orifices 39a-39d sont égaux.

L'huile s'échappe donc de chaque orifice 39a-39d et se répand de manière homogène dans les rainures circonférentielles 40a-40d et longitudinales 41a-41d de telle sorte que le centrage du pignon 33 n'est pas affecté.

Les FIG 6A et 6B représentent quant à elles un cas dans lequel le pignon 33 est décentré par rapport à la fusée 34 : le pignon 33 est placé trop à droite par rapport à la fusée 34 de telle sorte qu'une zone de pincement P est présente à gauche de la fusée 34. En raison de ce pincement, la section de passage en sortie de l'orifice 39a est réduite, ce qui réduit le débit d'huile 42a s'échappant à cet orifice 39a. Dès lors, le débit d'huile entrant dans la chambre de réception d'huile 37 étant constant, les débits d'huile 42b-42d s'échappant des autres orifices 39b-39d augmentent. Plus particulièrement, le débit d'huile augmente principalement au niveau de l'orifice situé à l'opposé de la zone de pincement P, ici l'orifice 39b, dans la mesure où les deux autres orifices 39c et 39d subissent eux-aussi une légère réduction de leur section de passage causée par le décentrage du pignon 33. En conséquence, le débit d'huile 42b de l'orifice 39b augmentant de manière importante, une plus grande quantité d'huile est apportée par la rainure circonférentielle 40b et la rainure longitudinale 41b dans la zone M située juste en amont de la zone de pincement P. Ainsi, une quantité accrue d'huile est appliquée à la surface interne du pignon 33 lors de son passage dans la zone amont M juste avant son arrivée dans la zone de pincement P, ce qui réduit le risque de frottement. En outre, la plus grande quantité d'huile présente dans cette zone permet d'élargir la zone de pincement P et tend ainsi à recentrer le pignon 33 autour de la fusée 34.

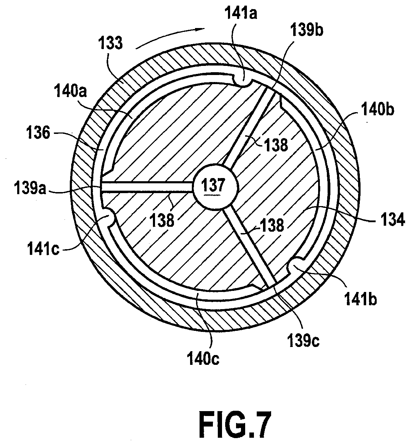

La FIG 7 illustre une variante de réalisation dans laquelle la fusée 134 comprend dans un plan radial donné trois orifices d'arrivée d'huile 139a, 139b et 139c au lieu de deux. Ces trois orifices 139a-139c sont situés de manière équilibrée autour de l'axe A, c'est-à-dire tous les 120°. De manière analogue à l'exemple précédent, la fusée 134 peut comprendre trois autres orifices d'arrivée d'huile situés dans un deuxième plan radial et déphasés de 60° par rapport aux orifices 139a-139c du premier plan radial.

De manière analogue au premier exemple, des rainures circonférentielles 140a-140c sont prévues en surface de la fusée 34 et s'étendent jusqu'à une zone située en amont de l'orifice suivant dans le sens horaire. De plus, de manière analogue, chaque rainure circonférentielle 140a-140c se prolonge à son extrémité aval par une rainure longitudinale 141a-141c.

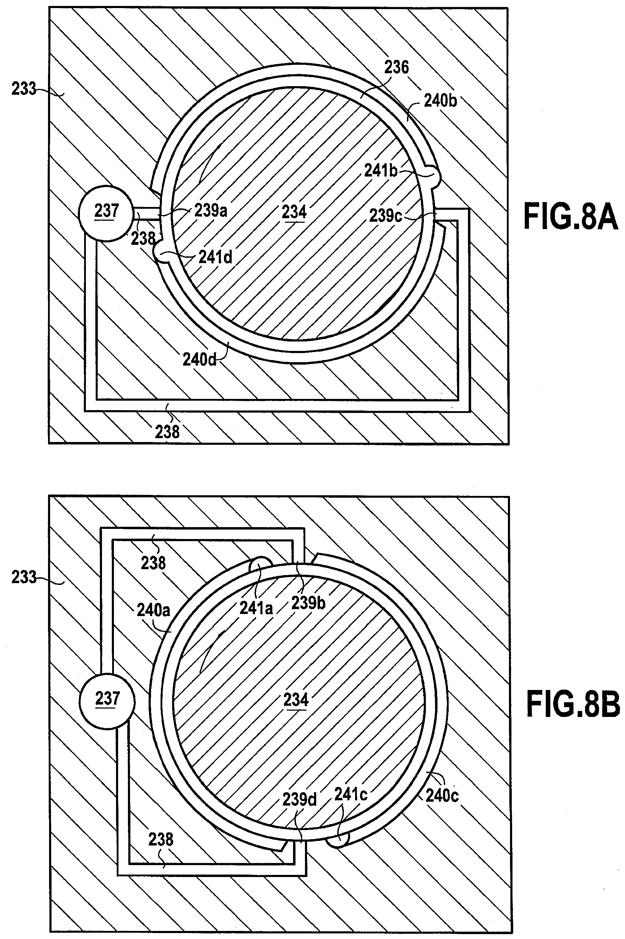

La FIG 8 illustre un troisième exemple de réalisation dans lequel la pièce fixe est une portée de palier 233 au sein de laquelle tourne un arbre 234. Dans un tel exemple, la pièce fixe étant la pièce externe, le réseau de distribution de lubrifiant est prévu au sein de cette dernière. Malgré cette différence, le réseau de distribution de lubrifiant est tout à fait analogue à celui du premier exemple : la surface interne de la cavité de la portée 233 est ainsi munie de deux orifices d'arrivée d'huile 239a, 239b dans un premier plan radial et de deux orifices d'arrivée d'huile 239c, 239d dans un deuxième plan radial avec un déphasage de 90° ; chacun de ces orifices 239a-d est suivi par un rainure circonférentielle 240a-d et une rainure longitudinale 241a-d.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé mais étant définie par les revendications jointes. En particulier, sauf précision contraire, une caractéristique décrite en relation avec un mode ou exemple de réalisation peut être appliquée de manière analogue à un autre mode ou exemple de réalisation dans le cadre défini par les revendications.

## Revendications

1. Ensemble mécanique comprenant
une première pièce (33) munie d'une cavité cylindrique,
une deuxième pièce (34) comprenant au moins une portion cylindrique engagée dans la cavité cylindrique de la première pièce (33), un interstice (36) séparant la portion cylindrique et la paroi de la cavité cylindrique afin de permettre un mouvement relatif de rotation entre la première (33) et la deuxième pièce (34), et
un réseau de distribution de lubrifiant (37, 38) configuré pour alimenter ledit interstice (36) avec un lubrifiant fluide de manière à former un palier fluide,
dans lequel une première surface (34s) parmi la surface intérieure de la cavité cylindrique de la première pièce et la surface extérieure de la portion cylindrique de la deuxième pièce est munie d'au moins un premier et un deuxième orifice d'arrivée de lubrifiant (39a, 39b) distants de plus de 120° l'un de l'autre autour de l'axe principal (F) de la première surface (34s), et
**caractérisé en ce que** la première surface (34s) présente en outre au moins une première rainure circonférentielle (40a) s'étendant circonférentiellement, dans le sens de la rotation relative de la seconde (33) desdites surfaces par rapport à la première surface (34s), depuis le voisinage du premier orifice d'arrivée de lubrifiant (39a) sur au moins 100°, l'extrémité amont de la rainure circonférentielle étant disjointe du premier orifice d'arrivée de lubrifiant de sorte que ledit premier orifice d'arrivée de lubrifiant (39a) ne débouche pas au fond de ladite rainure circonférentielle (40a), et une deuxième rainure circonférentielle (40b) s'étendant circonférentiellement, dans le sens de la rotation relative de la seconde (33) desdites surfaces par rapport à la première surface (34s), depuis le voisinage du deuxième orifice d'arrivée de lubrifiant (39b) sur au moins 100°, le deuxième orifice (39b) ne débouchant pas au fond de la deuxième rainure (40b).

2. Ensemble selon la revendication 1, dans lequel la première pièce est un pignon (33) et la deuxième pièce est un moyeu (44), ledit pignon (33) tournant autour dudit moyeu (34).

3. Ensemble selon la revendication 1 ou 2, dans lequel la première surface est la surface extérieure (34s) de la portion cylindrique de la deuxième pièce (34) et la seconde surface est la surface intérieure de la cavité cylindrique de la première pièce (33).

4. Ensemble selon la revendication 3, dans lequel la portion cylindrique de la deuxième pièce (34) comprend une chambre de réception de lubrifiant (37), configurée pour recevoir du lubrifiant depuis une source de lubrifiant et connectée fluidiquement aux orifices d'arrivée de lubrifiant (39a-39d).

5. Ensemble selon l'une quelconque des revendications 1 à 4, dans lequel la première surface (34s) comporte, dans un premier plan transversal (IVA), des premier et deuxième orifices d'arrivée de lubrifiant (39a, 39b) diamétralement opposés.

6. Ensemble selon l'une quelconque des revendications 1 à 5, dans lequel l'extrémité amont de la rainure circonférentielle est distante de moins de 10°, de préférence de moins de 5°, du premier orifice d'arrivée de lubrifiant.

7. Ensemble selon l'une quelconque des revendications 1 à 6, dans lequel une rainure circonférentielle (40a-40d) s'étend circonférentiellement, dans le sens de la rotation relative de la seconde (33) desdites surfaces par rapport à la première surface (34s), depuis le voisinage de chaque orifice d'arrivée de lubrifiant (39a-39d) sur au moins 160°.

8. Ensemble selon l'une quelconque des revendications 1 à 7, dans lequel la distance angulaire séparant l'extrémité aval de la rainure circonférentielle (40a) et un deuxième orifice d'arrivée de lubrifiant (39b) est comprise entre 5° et 20°, de préférence entre 10° et 15°.

9. Ensemble selon l'une quelconque des revendications 1 à 8, dans lequel la première surface (34s) présente en outre au moins une rainure longitudinale (41a-41d) s'étendant longitudinalement depuis l'extrémité aval d'une rainure circonférentielle (40a-40d).

10. Organe de transmission, du type train épicycloïdal, comportant un ensemble mécanique selon l'une quelconque des revendications précédentes, dans lequel la première pièce de l'ensemble mécanique est un pignon satellite (33) de train épicycloïdal et la deuxième pièce est une fusée (34) d'un porte-satellites (35) de train épicycloïdal.

11. Turbomachine comprenant un organe de transmission (30) selon la revendication 10.

## Patentansprüche

1. Mechanische Anordnung, umfassend
ein erstes Teil (33), das mit einem zylindrischen Hohlraum versehen ist,
ein zweites Teil (34), das mindestens einen zylindrischen Abschnitt umfasst, der in den zylindrischen Hohlraum des ersten Teils (33) eingreift, wobei ein Zwischenraum (36) zwischen dem zylindrischen Abschnitt und der Wand des zylindrischen Hohlraums vorhanden ist, um eine relative Drehbewegung zwischen dem ersten (33) und dem zweiten Teil (34) zu ermöglichen, und
ein Schmiermittelverteilungsnetzwerk (37, 38), das eingerichtet ist, um den Zwischenraum (36) mit einem flüssigen Schmiermittel zu versorgen, um ein Fluidlager zu bilden,
wobei eine erste Oberfläche (34s) aus der inneren Oberfläche des zylindrischen Hohlraums des ersten Teils und der äußeren Oberfläche des zylindrischen Abschnitts des zweiten Teils mit mindestens einer ersten und einer zweiten Schmiermitteleinlassöffnung (39a, 39b) versehen ist, die um mehr als 120° voneinander beabstandet um die Hauptachse (F) der ersten Oberfläche (34s) angeordnet sind, und
**dadurch gekennzeichnet, dass** die erste Oberfläche (34s) ferner mindestens eine erste Umfangsnut (40a) aufweist, die sich in Umfangsrichtung von der Nähe der ersten Schmiermittelaufnahmeöffnung (39a) über mindestens 100° in der Richtung der relativen Drehung der zweiten (33) der Oberflächen in Bezug auf die erste Oberfläche (34s) erstreckt, wobei das stromaufwärtige Ende der Umfangsnut von der ersten Schmiermitteleinlassöffnung derart getrennt ist, dass die erste Schmiermitteleinlassöffnung (39a) nicht am Boden der Umfangsnut (40a) mündet, und sich eine zweite Umfangsrille (40b) in Umfangsrichtung von der Nähe der zweiten Schmiermittelaufnahmeöffnung (39b) über mindestens 100° in der Richtung der relativen Drehung der zweiten (33) der Oberflächen in Bezug auf die erste Oberfläche (34s) erstreckt, wobei die zweite Öffnung (39b) nicht am Boden der zweiten Nut (40b) mündet.

2. Anordnung nach Anspruch 1, wobei das erste Teil ein Ritzel (33) ist und das zweite Teil eine Nabe (44) ist, wobei sich das Ritzel (33) um die Nabe (34) dreht.

3. Anordnung nach Anspruch 1 oder 2, wobei die erste Oberfläche die äußere Oberfläche (34s) des zylindrischen Abschnitts des zweiten Teils (34) ist, und die zweite Oberfläche die innere Oberfläche des zylindrischen Hohlraums des ersten Teils (33) ist.

4. Anordnung nach Anspruch 3, wobei der zylindrische Abschnitt des zweiten Teils (34) eine Schmiermittelaufnahmekammer (37) umfasst, die eingerichtet ist, um Schmiermittel von einer Schmiermittelquelle aufzunehmen und die mit den Schmiermitteleinlassöffnungen (39a-39d) fluidisch verbunden ist.

5. Anordnung nach einem der Ansprüche 1 bis 4, wobei die erste Oberfläche (34s) in einer ersten Querschnittsebene (IVA) erste und zweite einander diametral gegenüberliegende Schmiermitteleinlassöffnungen (39a, 39b) umfasst.

6. Anordnung nach einem der Ansprüche 1 bis 5, wobei das stromaufwärtige Ende der Umfangsnut weniger als 10°, vorzugsweise weniger als 5° von der ersten Schmiermitteleinlassöffnung entfernt ist.

7. Anordnung nach einem der Ansprüche 1 bis 6, wobei sich eine Umfangsnut (40a-40d) in Umfangsrichtung von der Nähe jeder Schmiermitteleinlassöffnung (39a-39d) über mindestens 160° in der Richtung der relativen Drehung der zweiten (33) der Oberflächen in Bezug auf die erste Oberfläche (34s) erstreckt.

8. Anordnung nach einem der Ansprüche 1 bis 7, wobei der Winkelabstand, der das stromabwärtige Ende der Umfangsnut (40a) und eine zweite Schmiermitteleinlassöffnung (39b) trennt, im Bereich zwischen 5° und 20°, vorzugsweise zwischen 10° und 15° liegt.

9. Anordnung nach einem der Ansprüche 1 bis 8, wobei die erste Oberfläche (34s) ferner mindestens eine Längsnut (41a-41d) aufweist, die sich in Längsrichtung von dem stromabwärtigen Ende einer Umfangsnut (40a-40d) erstreckt.

10. Übertragungsorgan vom Typ Umlaufgetriebe, umfassend eine mechanische Anordnung nach einem der vorhergehenden Ansprüche, wobei das erste Teil der mechanischen Anordnung ein Umlaufgetriebe-Planetenrad (33) ist und das zweite Teil eine Spindel (34) eines Umlaufgetriebe-Planetenträgers (35) ist.

11. Turbomaschine, umfassend ein Übertragungsorgan (30) nach Anspruch 10.

## Claims

1. A mechanical assembly comprising a first part (33) provided with a cylindrical cavity;
• a second part (34) having at least one cylindrical portion engaged in the cylindrical cavity of the first part (33), a gap (36) separating the cylindrical portion and the wall of the cylindrical cavity so as to allow relative movement in rotation between the first and second parts (33, 34); and
• a lubricant distribution network (37, 38) configured for feeding said gap (36) with a fluid lubricant so as to form a fluid bearing;
wherein a first surface (34s) selected from the inside surface of the cylindrical cavity of the first part and the outside surface of the cylindrical portion of the second part is provided with at least first and second lubricant admission orifices (39a,39b) that are spaced apart from each other by not less than 120° about the main axis (F) of the first surface (34s); and
the mechanical assembly being **characterized in that** the first surface (34s) also presents at least one first circumferential groove (40a) extending circumferentially from the vicinity of the first lubricant admission orifice (39a) over at least 100° and in the direction of relative rotation of the second of said surfaces (33) relative to the first surface (34s), the upstream end of the circumferential groove being disjoint from the first lubricant admission orifice in such a manner that said first lubricant admission orifice (39a) does not open out into the bottom of said circumferential groove (40a), and a second circumferential groove (40b) extending circumferentially in the direction of relative rotation of the second of said surfaces (33) relative to the first surface (34s), from the vicinity of the second lubricant admission orifice (39b) over at least 100°, wherein the second lubricant admission orifice (39b) does not open out into the bottom of the second groove (40b).

2. An assembly according to claim 1, wherein the first part is a gear (34) and the second part is a hub (44), said gear (33) rotating about said hub (34).

3. An assembly according to claim 1 or claim 2, wherein the first surface is the outside surface (34s) of the cylindrical portion of the second part (34) and the second surface is the inside surface of the cylindrical cavity of the first part (33).

4. An assembly according to claim 3, wherein the cylindrical portion of the second part (34) includes a lubricant reception chamber (37) configured to receive lubricant from a lubricant source and in fluid flow connection with the lubricant admission orifices (39a-39d) .

5. An assembly according to any one of claims 1 to 4, wherein the first surface (34s) includes in a first transverse plane (IVA) first and second lubricant admission orifices (39a, 39b) that are diametrically opposite.

6. An assembly according to any one of claims 1 to 5, wherein the upstream end of the circumferential groove is distant from of the first lubricant admission orifice by less than 10°, preferably by less than 5°.

7. An assembly according to any one of claims 1 to 6, wherein a circumferential groove (40a-40d) extends circumferentially from the vicinity of each lubricant admission orifice (39a-39d) over at least 160° in the direction of relative rotation of the second of said surfaces (33) relative to the first surface (34s).

8. An assembly according to any one of claims 1 to 7, wherein the angular distance between the downstream end of the circumferential groove (40a) and a second lubricant admission orifice (39b) lies in the range 5° to 20°, preferably in the range 10° to 15°.

9. An assembly according to any one of claims 1 to 8, wherein the first surface (34s) also presents at least one longitudinal groove (41a-41d) extending longitudinally from the downstream end of a circumferential groove (40a-40d).

10. A transmission member of the epicyclic gear train type including a mechanical assembly according to any preceding claim, wherein the first part of the mechanical assembly is an epicyclic gear train planet gear (33) and the second part is a spindle (34) of an epicyclic gear train planet carrier (35).

11. A turbine engine including a transmission member (30) according to claim 10.
